# NEUE EUROPÄISCHE PATENTSCHRIFT

(11) **EP 2 527 011 B3**
(45) Veröffentlichungstag dieser Patentschrift: **13.09.2023**
(45) Hinweis auf die Patenterteilung: 27.09.2017
(21) Anmeldenummer: 12405049.3
(22) Anmeldetag: 24.05.2012
(51) Int. Cl.: A63B 29/02, G01S 3/14, G01S 3/04

(54) **Such- und Sendegerät**
Search and transmission device
Appareil de recherche et d'émission

(30) Priorität: 26.05.2011 CH 9022011
(43) Veröffentlichungstag der Anmeldung: 28.11.2012
(73) Patentinhaber: Mammut Sports Group AG, 5703 Seon (CH)
(72) Erfinder: Forrer, Daniel, CH-9631 Ulisbach (CH); Genswein, Manuel, CH-8706 Meilen (CH); Gottschalk, Uwe, CH-5610 Wohlen (CH)
(74) Vertreter: Leimgruber, Fabian Alfred Rupert

(56) Entgegenhaltungen:
- DE-A1- 19 832 078
- DE-A1-102005 003 452
- US-A1- 2006 148 423

## Beschreibung

### Technisches Gebiet

Die Erfindung betrifft ein Lawinen-Verschütteten-Suchgerät, welches eine Empfangseinheit zum Bestimmen einer Empfangsrichtung eines Sendesignals, eine Verarbeitungseinheit und einen akustischen Signalgenerator umfasst. Weiter betrifft die Erfindung ein Verfahren zur Erzeugung eines Tonmusters zur Signalisierung einer Empfangsrichtung eines empfangenen Sendesignals in einem Lawinen-Verschütteten-Suchgerät, wobei die Empfangsrichtung des Sendesignals von einer Empfangseinheit bestimmt wird.

### Stand der Technik

Ein dem technischen Gebiet entsprechendes Lawinen-Verschütteten-Suchgerät (LVS) ist z. B. in der EP 1 785 169 A1 (Ascom (Schweiz) AG) beschreiben und umfasst eine Sende-/ Empfangsvorrichtung. Die Sendevorrichtung ermöglicht im Normalbetrieb (Sendemodus) das Aussenden eines Sendesignals. Aufgrund dieses Sendesignals kann das Gerät bzw. der Benutzer, der das Gerät bei sich trägt, geortet werden, wenn der Benutzer samt Gerät beispielsweise von einer Lawine verschüttet wird. Ein Retter, der ebenfalls ein solches Gerät bei sich trägt, kann sein Gerät im Fall einer Lawine auf "Suchbetrieb" (Suchmodus) umstellen, sodass das vom Gerät eines Verschütteten ausgesendete Sendesignal durch die Empfangsvorrichtung des Suchgeräts im Suchmodus empfangen und aufgrund des Signals das Gerät des Verschütteten geortet werden kann. Im Normalzustand befindet sich das Gerät in einem Sendemodus, in welchem ein periodisch gepulstes Sendesignal abgesetztwird. Die Suchgeräte arbeiten dabei miteinem unmodulierten gepulsten Sendesignal bei einer Frequenz von 457 kHz. Die Pulse (Sendepulse) des 457 kHz Sendesignals weisen bei bekannten LVS eine Sendepuls-Periode in der Grössenordnung von 1 Sekunde, d.h. eine Sendepuls-Frequenz von 1 Hz, auf und haben einen Duty-Cycle von etwa 10 - 30%. Diese und weitere Merkmale des Sendesignals für eine LVS sind im European Telecom Standard ETS 300718, Radio Equipment and Systems (RES); Avalanche Beacons; Transmitter-receiver systems, ETSI March 1997 definiert und beschrieben.

Derartige Suchgeräte weisen üblicherweiseoptische und/oder akustische Anzeigemittel auf, welche den Benutzer z. B. im Suchmodus mit Informationen zum empfangenen Signal versorgen. Aus der EP 0 733 916 (silvretta-sherpas Sportartikel GmbH) ist z. B. bekannt, ein Suchgerät mit einer Anordnung von Leuchtdioden zu versehen, welche den Benutzer während der Suche einerseits über eine Stärke eines empfangenen Signals und andererseits über eine Abweichung von einer einmal ermittelten Peilung des Sendeorts informiert. Dabei erfolgt eine Peilung des Sendeorts über die Ermittelung eines Maximums einer Feldstärkenauswertung des Sendesignals. Die so ermittelte Richtung kann durch einen elektronischen Kompass absolut eingepeilt werden, wobei dann bei der weiteren Suche eine Abweichung von der einmal eingepeilten Richtung durch zwei seitlich angeordnete Leuchtdioden indiziert werden kann.

Aus der EP 1 439 400 A2 (Seidel Elektronik GmbH Nfg. KG) ist zudem ein LVS mit einer Empfangseinheit mit drei Antennen bekannt, welche eine direkte Bestimmung der Suchrichtung zu einem Sendeort eines Sendesignals erlaubt. Die so ermittelte Richtung wird auf einer Anzeige des LVS derart dargestellt, dass ein Benutzer aufgrund der angezeigten Richtung zum Sendeort geführt wird.

Weiter ist aus der EP 0 855 600 A2 (John W. Hereford & Michael X. Bond) ein LVS mit einer Empfangseinheit mit zwei Antennen bekannt. Diese beiden Antennen sind in einem 90 Grad-Winkel zueinander ausgerichtet. Zur Bestimmung der Empfangsrichtung wird von einem differenziellen Front-End-Verstärker eine dritte, virtuelle Antenne bereitgestellt, deren Signalamplitude aus der Phaseninformation der Signale der beiden Antennen hergeleitet wird. Die Suchrichtung zu einem Sendeort eines Sendesignals wird aus den Signalen der beiden echten Antennen und dem Signal der virtuellen Antenne bestimmt und dem Benutzer durch richtungsweisende LEDs angezeigt.

Es gibt auch LVS, bei denen eine akustische Anzeige die Entfernung angibt. Üblicherweise handelt es sich dabei um einen digitalen Ton, welcher beispielsweise wie in der DE 198 31 421 A1 (Bürger) beschrieben die entfernungsabhängige, empfangene Signalstärke durch einen digitalen Ton mit einer zur Signalstärke proportionalen Tonfrequenz anzeigt.

Ein weiteres Beispiel ist in der US 2006/148423 A1 beschrieben. Der Rettungssender sendet ein Rettungssignal aus, das eine digitale Identifikation beinhaltet, aufgrund welcher der Rettungsempfänger zwischen zwei oder mehr Rettungssignalen unterscheiden kann. Der Rettungsempfänger kann eine oder mehrere Antennen umfassen, um eine Richtung des Signals zu bestimmen. Um diese Richtung anzuzeigen, umfasst der Rettungsempfänger einen Bildschirm. Zudem umfasst der Rettungsempfänger eine Distanzanzeige. Diese Distanzanzeige kann durch einen Signalton ergänzt werden, welcher in Abhängigkeit zur Distanz zu einem Rettungssender die Lautstärke ändert.

Solche LVS können den Experten weiter einen zusätzlichen, akustischen Suchmodus bieten. Hierbei handelt es sich um den klassischen, analogen Ton, welcherdie Stärke des empfangenen Signals dem Benutzer direkt in akustischer Form anzeigt. Diese Form der akustischen Benutzerführung beschränkt sich auf die Verwendung von einer Suchantenne.

Entsprechend ist der klassische, analoge Ton einerseits von der Entfernung des Senders und andererseits von der Ausrichtung der Empfangsantenne zum Sendesignal abhängig. Deshalb bedarf dieser Suchmodus eines intensiven Trainings und ist nur für Experten geeignet.

Der Nachteil dieser bekannten Such- und Sendegeräte ist, dass die Suche nach einem Verschütteten, welcherein Such- und Sendegerät im Sendemodus trägt, viel Zeit und Übung erfordert. Bei einer Suche beispielsweise auf einem Lawinenkegel ist es für einen Suchenden schwierig, sich auf die Topografie des Lawinenkegels zu konzentrieren, um sich für den Suchvorgang sicher über den unebenen Schnee, Schutt und Geröll zu bewegen, und gleichzeitig auf die optische und/oder akustische Anzeige des Such- und Sendegeräts zu achten und die Suche mit weiteren Suchenden, welche sich ebenfalls am Suchvorgang beteiligen, zu koordinieren.

### Darstellung der Erfindung

Aufgabe der Erfindung ist es, ein dem eingangs genannten technischen Gebiet zugehörendes Lawinen-Verschütteten-Suchgerät sowie ein entsprechendes Verfahren zu schaffen, welches den Suchvorgang vereinfacht, damit ein Suchender den Suchvorgang schneller erfolgreich zu Ende führen kann.

Die Lösung der Aufgabe ist durch die Merkmale der Ansprüche 1 und 11 definiert. Gemäss dem erfindungsgemässen Lawinen-Verschütteten-Suchgerät ist die Empfangsrichtung durch die Verarbeitungseinheit einem von 3, 4, 5, 6, 7, 8, 9, oder 10 Raumwinkelbereichen um das Lawinen-Verschütteten-Suchgerät zuordenbar, wobei durch den akustischen Signalgenerator abhängig von dem der Empfangsrichtung zugeordneten Raumwinkelbereich eines von wenigstens zwei Tonmustern erzeugbar ist, wobei durch den Signalgenerator ein erstes Tonmuster erzeugbar ist, wenn die von der Empfangseinheit bestimmte Empfangsrichtung in einem vorderen Raumwinkelbereich liegt, welcher in eine Vorwärtsrichtung des Lawinen-Verschütteten-Suchgeräts gerichtet ist, wobei durch den Signalgenerator ein zweites Tonmuster erzeugbar ist, wenn die von der Empfangseinheit bestimmte Empfangsrichtung in einem hinteren Raumwinkelbereich liegt, welcher in eine Rückwärtsrichtung des Lawinen-Verschütteten-Suchgeräts gerichtet ist, und wobei durch den Signalgenerator ein drittes Tonmuster erzeugbar ist, wenn die von der Empfangseinheit bestimmte Empfangsrichtung in einem von wenigstens einem seitlichen Raumwinkelbereich liegt, welcher ausserhalb des vorderen und ausserhalb des hinteren Raumwinkelbereichs liegt.

Dabei kann die Empfangseinheit des Lawinen-Verschütteten-Suchgeräts beliebig ausgebildet sein, solange sie eine Bestimmung der Empfangsrichtung ermöglicht, sodass die Empfangsrichtung durch die Verarbeitungseinheit einem von wenigstens zwei Raumwinkelbereichen um das Lawinen-Verschütteten-Suchgerät zuordenbar ist. So kann die Empfangseinheit beispielsweise wie in der EP 1 439 400 A2 (Seidel Elektronik GmbH Nfg. KG) beschrieben drei Antennen umfassen, durch welche die Empfangsrichtung bestimmbar ist. Sie kann aber auch nur zwei Antennen oder wie in der EP 0 855 600 A2 (John W. Hereford & Michael X. Bond) beschrieben zwei Antennen und eine virtuelle Antenne umfassen, durch welche die Empfangsrichtung bestimmbar ist. Weiter besteht auch die Möglichkeit, dass die Empfangseinheit eine einzige Antenne umfasst, welche durch den Benutzer geschwenkt wird oder welche im Lawinen-Verschütteten-Suchgerät wie ein Radar dreht und entsprechend eine Bestimmung der Empfangsrichtung ermöglicht. Es ist aber auch denkbar, dass die Empfangseinheit zur Bestimmung der Empfangsrichtung mehr als drei Antennen umfasst.

Der Begriff Raumwinkelbereich bezeichnet hierbei einen Teil des Raums um das Lawinen-Verschütteten-Suchgerät herum, beispielsweise in der Form von vom Gerät ausgehenden, nach aussen offenen Kugelsektoren.

Gemäss dem erfindungsgemässen Verfahren wird die Empfangsrichtung von einer Verarbeitungseinheit einem von 3, 4, 5, 6, 7, 8, 9 oder 10 Raumwinkelbereichen um das Lawinen-Verschütteten-Suchgerät zugeordnet, wobei von einem akustischen Signalgenerator abhängig von dem der Empfangsrichtung zugeordneten Raumwinkelbereich eines von wenigstens zwei Tonmustern erzeugt wird, wobei durch den Signalgenerator ein erstes Tonmuster erzeugt wird, wenn die von der Empfangseinheit bestimmte Empfangsrichtung in einem vorderen Raumwinkelbereich liegt, welcher in eine Vorwärtsrichtung des Lawinen-Verschütteten-Suchgeräts gerichtet ist, wobei durch den Signalgenerator ein zweites Tonmuster erzeugt wird, wenn die von der Empfangseinheit bestimmte Empfangsrichtung in einem hinteren Raumwinkelbereich liegt, welcher in eine Rückwärtsrichtung des Lawinen-Verschütteten-Suchgeräts gerichtet ist, und wobei durch den Signalgenerator ein drittes Tonmuster erzeugt wird, wenn die von der Empfangseinheit bestimmte Empfangsrichtung in einem von wenigstens einem seitlichen Raumwinkelbereich liegt, welcher ausserhalb des vorderen und ausserhalb des hinteren Raumwinkelbereichs liegt.

Die Erfindung hat den Vorteil, dass dem Suchenden die Empfangsrichtung des Sendesignals mit der Genauigkeit eines Raumwinkelbereichs akustisch signalisiert wird. Dadurch kann sich der Suchende durch das akustische Signal (Tonmuster) leiten lassen und muss sich nicht in erster Linie auf eine optische Anzeige konzentrieren. Entsprechend kann er sich optisch beispielsweise auf die Topografie des Lawinenkegels konzentrieren, während er gleichzeitig vom akustischen Signal geleitet wird. Dies vereinfacht den Suchvorgang erheblich, da sich der Suchende bei der Suche entsprechend schneller fortbewegen und gleichzeitig eine visuelle Oberflächensuche durchführen kann.

Durch eine derartige akustische Benutzerführung ist auch eine Suche gänzlich ohne optische Anzeigemittel möglich, beispielsweise wenn diese gar nicht vorhanden oder defekt sind, oder wenn die Suche im Dunkeln oder bei sonstigen schlechten Sichtverhältnissen durchgeführt wird.

Weiter hat die Erfindung den Vorteil, dass das akustische Signal nicht einfach wie aus dem Stand der Technik bekannt proportional zur Stärke des empfangenen Sendesignals und zur Ausrichtung der Empfangsantenne zur Empfangsrichtung des Sendesignals ist. Die Empfangsrichtung wird unabhängig von der Stärke des empfangenen Sendesignals signalisiert. Deshalb ist keine Schwenkbewegung des Lawinen-Verschütteten-Suchgeräts nötig, um den Raumwinkelbereich, in welchem die Empfangsrichtung liegt, zu erkennen. Dies vereinfacht die Suche deutlich.

Durch den Signalgenerator ist ein erstes Tonmuster erzeugbar, wenn die von der Empfangseinheit bestimmte Empfangsrichtung in einem vorderen Raumwinkelbereich liegt, welcher in eine Vorwärtsrichtung des Lawinen-Verschütteten-Suchgeräts gerichtet ist. Die

Vorwärtsrichtung ist hierbei typischerweise durch die Bewegungsrichtung des Lawinen-Verschütteten-Suchgeräts bestimmt, d. h. diejenige Richtung, in welche sich das Lawinen-Verschütteten-Suchgerät (typischerweise vom Suchenden gehalten) bewegt, ist die Vorwärtsrichtung. Wenn sich der Suchende mit dem Lawinen-Verschütteten-Suchgerät in eine bestimmte Richtung bewegt, signalisiert ihm das erste Tonmuster, dass er sich in der richtigen Richtung zum Lawinen-Verschütteten-Suchgerät eines Verschütteten bewegt. Ertönt nicht das erste Tonmuster, heisst das, dass er sich für den Suchvorgang besser in eine andere Richtung bewegen sollte, um den Verschütteten möglichst rasch aufzuspüren. Dies hat den Vorteil, dass der Suchvorgang für den Suchenden deutlich vereinfacht wird und entsprechend rascher durchgeführt werden kann.

Durch den Signalgenerator ist ein zweites Tonmuster erzeugbar, wenn die von der Empfangseinheit bestimmte Empfangsrichtung in einem hinteren Raumwinkelbereich liegt, welcher in eine Rückwärtsrichtung des Lawinen-Verschütteten-Suchgeräts gerichtet ist. Die Rückwärtsrichtung ist hierbei typischerweise durch die der Bewegungsrichtung des Lawinen-Verschütteten-Suchgeräts entgegengesetzte Richtung bestimmt. D. h. die Rückwärtsrichtung ist typischerweise die der Vorwärtsrichtung entgegengesetzte Richtung. Zudem sollte sich in diesem Fall das zweite Tonmuster vorzugsweise deutlich vom ersten Tonmuster unterscheiden.

Wenn dem Suchenden bei seiner Suche das zweite Tonmuster signalisiert wird, heisst das somit, dass er sich für den Suchvorgang in die entgegengesetzte Richtung bewegen sollte. Dies hat den Vorteil, dass der Suchvorgang für den Suchenden deutlich vereinfacht wird und entsprechend rascher durchgeführt werden kann.

Durch den Signalgenerator ist ein drittes Tonmuster erzeugbar, wenn die von der Empfangseinheit bestimmte Empfangsrichtung in einem von wenigstens einem seitlichen Raumwinkelbereich liegt, welcher ausserhalb des vorderen und ausserhalb des hinteren Raumwinkelbereichs liegt. Dabei sollte sich das dritte Tonmuster vorzugsweise deutlich vom ersten und vom zweiten Tonmuster unterscheiden. Dies hat den Vorteil, dass dem Suchenden durch das dritte Tonmuster signalisiert wird, dass die Empfangsrichtung in einem Winkel zur Vorwärtsrichtung liegt und er seine Suchbewegung entsprechend anpassen sollte.

Bevorzugt ist der Raum um das Lawinen-Verschütteten-Suchgerätzwischen dem vorderen und dem hinteren Raumwinkelbereich in mehrere, d. h. mindestens zwei seitliche Raumwinkelbereiche aufgeteilt, sodass die Empfangsrichtung durch die Verarbeitungseinheit einem dieser unterschiedlichen seitlichen Raumwinkelbereiche zuordenbar ist. Dies hat den Vorteil, dass dem Suchenden für mehrere seitliche Raumwinkelbereiche signalisiertwerden kann, dass die Empfangsrichtung in einem von diesen Raumwinkelbereichen liegt.

Grundsätzlich ist es möglich, dass durch den Signalgenerator dasselbe Tonmuster erzeugbar ist, wenn die Empfangsrichtung durch die Verarbeitungseinheit unterschiedlicher seitlicher Raumwinkelbereiche zuordenbar ist. Vorteilhafterweise sind durch den Signalgenerator allerdings unterschiedliche Tonmuster erzeugbar, wenn die Empfangsrichtung durch die Verarbeitungseinheit unterschiedlicher seitlicher Raumwinkelbereiche zuordenbar ist. Dies hat den Vorteil, dass die Empfangsrichtung mehr als einem seitlichen Raumwinkelbereich zuordenbar sein kann und dem Suchenden signalisiert werden kann, in welchem dieser seitlichen Raumwinkelbereiche die Empfangsrichtung liegt.

Vorzugsweise grenzt einer des wenigstens einen seitlichen Raumwinkelbereichs auf einer ersten Seite und ein weiterer des wenigstens einen seitlichen Raumwinkelbereichs auf einer zweiten Seite an den vorderen Raumwinkelbereich an. Dies hat den Vorteil, dass dem Suchenden durch entsprechende Tonmuster signalisiert wird, in welcher Richtung die Empfangsrichtung liegt.

Bevorzugt grenzt einer des wenigstens einen seitlichen Raumwinkelbereichs auf einer ersten Seite und ein weiterer des wenigstens einen seitlichen Raumwinkelbereichs auf einer zweiten Seite an den hinteren Raumwinkelbereich an. Dies hat ebenfalls den Vorteil, dass dem Suchenden durch entsprechende Tonmuster signalisiert wird, in welcher Richtung die Empfangsrichtung liegt. Dabei besteht die Möglichkeit, dass es sich bei den beiden seitlichen Raumwinkelbereichen um seitliche Raumwinkelbereiche handelt, welche zugleich auf der ersten bzw. zweiten Seite des vorderen Raumwinkelbereichs an den vorderen Raumwinkelbereich angrenzen.

Vorzugsweise umfasst wenigstens ein seitlicher Raumwinkelbereich zwei Teilwinkelbereiche, welche in Bezug auf eine von der Rückwärtsrichtung zur Vorwärtsrichtung verlaufend definierte Achse des Lawinen-Verschütteten-Suchgerät oder eine durch diese Achse verlaufende Ebene symmetrisch angeordnet sind. Diese symmetrische Anordnung der Teilwinkelbereiche hat den Vorteil, dass für beide Teilwinkelbereiche eines Raumwinkelbereichs das gleiche Tonmuster erzeugbar ist, wobei dem Suchenden durch das Tonmuster signalisiert wird, in welchem Winkelbereich zur Vorwärtsrichtung des Lawinen-Verschütteten-Suchgeräts die Empfangsrichtung liegt. Dadurch kann der das Lawinen-Verschütteten-Suchgerätumgebende Raum in eine Anzahl Raumwinkel aufgeteilt werden, wobei eine geringe Anzahl Tonmuster für die Signalisation benötigt werden. Dies hat den Vorteil, dass die Tonmuster vom Suchenden einfacher unterschieden werden können. Entsprechend wird dadurch fürden Suchenden der Suchvorgang vereinfacht und kann rascher erfolgreich zu Ende geführt werden. Zudem hat dies den Vorteil, dass der Suchende auch unter Stress stehend den Suchvorgang erfolgreich zu Ende führen kann.

Vorteilhafterweise ist die Empfangsrichtung durch die Verarbeitungseinheit dem vorderen, dem hinteren oder einem von genau zwei seitlichen Raumwinkelbereichen zuordenbar, wobei die beiden seitlichen Raumwinkelbereiche vorzugsweise je zwei in Bezug auf die von der Rückwärtsrichtung zur Vorwärtsrichtung verlaufend definierte Achse des Lawinen-Verschütteten-Suchgeräts symmetrische Teilbereiche umfassen. Dies hat den Vorteil, dass den verschiedenen Raumwinkelbereichen insgesamt vier verschiedene Tonmuster zugeordnet werden. Diese geringe Anzahl an verschiedenen Tonmustern hat den Vorteil, dass die einzelnen Tonmuster für den Suchenden einfach unterscheidbar sind. Weiter hat dies den Vorteil, dass die verschiedenen Raumwinkelbereiche genügend gross sind, so dass bei einem Suchvorgang, bei welchem sich der Suchende beispielsweise schwankend über einen unebenen Lawinenkegel bewegt, das Tonmuster nicht mit jedem Schritt des Suchenden ändert, weil sich durch die schwankende Bewegung des Lawinen-Verschütteten-Suchgeräts die Empfangsrichtung von einem Raumwinkelbereich in einen anderen Raumwinkelbereich ändert.

Es besteht aber auch die Möglichkeit, dass die Empfangsrichtung durch die Verarbeitungseinheit dem vorderen, dem hinteren oder einem von genau drei seitlichen Raumwinkelbereichen zuordenbar ist. Dadurch können den verschiedenen Raumwinkelbereichen insgesamt fünf verschiedene Tonmuster zugeordnet werden. Aus dieser Anzahl Tonmuster kann ein Suchender leicht das durch den Signalgenerator erzeugte Tonmuster identifizieren und entsprechend seine Suche anpassen. Weiter hat dies den Vorteil, dass die verschiedenen Raumwinkelbereiche genügend gross sind, so dass bei einem Suchvorgang, bei welchem sich der Suchende beispielsweise schwankend über einen unebenen Lawinenkegel bewegt, das Tonmuster nicht mit jedem Schritt des Suchenden ändert, weil sich durch die schwankende Bewegung des Lawinen-Verschütteten-Suchgeräts die Empfangsrichtung von einem Raumwinkelbereich in einen anderen Raumwinkelbereich ändert.

Als weitere Variante besteht auch die Möglichkeit, dass die Empfangsrichtung durch die Verarbeitungseinheitdem vorderen, dem hinteren oder einem von genau vier seitlichen Raumwinkelbereichen zuordenbar ist. Dadurch können den verschiedenen Raumwinkelbereichen insgesamt sechs verschiedene Tonmuster zugeordnet werden. Dies hat den Vorteil, dass ein Suchender aus der Anzahl möglicher Tonmuster leicht das ertönende Tonmuster identifizieren und seine Suche entsprechend anpassen kann. Weiter hat dies den Vorteil, dass die einzelnen Raumwinkelbereiche nicht sehr gross sind und entsprechend eine gute Anzeige der Empfangsrichtung ermöglicht wird.

Die Empfangsrichtung kann aber auch durch die Verarbeitungseinheit dem vorderen, dem hinteren oder einem von genau fünf seitlichen Raumwinkelbereichen zuordenbar sein. Dies hat den Vorteil, dass die einzelnen Raumwinkelbereiche nicht sehr gross sind und entsprechend eine präzise Anzeige der Empfangsrichtung ermöglicht wird.

Als Variante dazu besteht auch die Möglichkeit, dass die Empfangsrichtung durch die Verarbeitungseinheit dem vorderen, dem hinteren oder einem von mehr als fünf seitlichen Raumwinkelbereichen zuordenbar ist. insbesondere besteht die Möglichkeit, dass die Empfangsrichtung dem vorderen, dem hinteren oder einem von einer grosse Anzahl seitlicher Raumwinkelbereiche zuordenbar ist. Durch eine grosse Anzahl seitlicher Raumwinkelbereiche und eine entsprechende Anzahl Tonmuster wird eine quasikontinuierliche oder gar kontinuierliche Anzeige der Empfangsrichtung ermöglicht. Entsprechend kann durch das Tonmusterdie Empfangsrichtung relativ zum Lawinen-Verschütteten-Suchgerät sehr präzise angezeigt werden.

Bevorzugt sind der vordere Raumwinkelbereich, der hintere Raumwinkelbereich und die seitlichen Raumwinkelbereiche aneinander angrenzend angeordnet. Vorteilhafterweise wird durch die Raumwinkelbereiche der gesamte Raum um das Lawinen-Verschütteten-Suchgerät abgedeckt. Dies hat den Vorteil, dass jede mögliche Empfangsrichtung durch ein Tonmuster angezeigt wird. Alternativ dazu besteht aber auch die Möglichkeit, dass es eine oder mehrere Lücken zwischen den Raumwinkelbereichen gibt, so dass das Empfangssignal, falls es in einem solchen Bereich liegt, nicht einem Raumwinkelbereich zugeordnet werden kann. Beispielsweise kann es vorteilhaft sein, wenn kein hinterer Raumwinkelbereich definiert ist. Im Falle von mehreren zuzuordnenden Sendesignalen beispielsweise kann es dadurch für den Suchenden einfacher sein, sich auf ein Sendesignal zu konzentrieren.

Vorzugsweise ist durch den Signalgenerator je ein unterschiedliches Tonmuster erzeugbar, wenn die von der Empfangseinheit bestimmte Empfangsrichtung in einem anderen des vorderen Raumwinkelbereichs, des hinteren Raumwinkelbreichs und dem wenigstens einen seitlichen Raumwinkelbereich liegt. Dies hat den Vorteil, dass der Raumwinkelbereich, in welchem die Empfangsrichtung liegt, eindeutig zuordenbar ist.

Vorteilhafterweise ist die Empfangsrichtung durch die Verarbeitungseinheit einem von 3, 4 oder 5 Raumwinkelbereichen zuordenbar. Dies hat den Vorteil, dass die verschiedenen Raumwinkelbereiche genügend gross sind, sodass bei einem Suchvorgang, bei welchem sich der Suchende beispielsweise schwankend über einen unebenen Lawinenkegel bewegt, das Tonmuster nicht mit jedem Schritt des Suchenden ändert, weil sich durch die schwankende Bewegung des Lawinen-Verschütteten-Suchgeräts die Empfangsrichtung von einem Raumwinkelbereich in einen anderen Raumwinkelbereich ändert.

Alternativ dazu besteht aber auch die Möglichkeit, dass die Empfangsrichtung durch die Verarbeitungseinheit mehr als 10 Raumwinkelbereichen zuordenbar ist. Durch eine grosse Anzahl Raumwinkelbereiche und eine entsprechende Anzahl Tonmuster wird eine quasikontinuierliche oder gar kontinuierlicheAnzeige der Empfangsrichtung ermöglicht. Entsprechend kann durch das Tonmuster die Empfangsrichtung relativ zum Lawinen-Verschütteten-Suchgerät sehr präzise angezeigt werden.

Wie bereits erwähnt, haben diese Raumwinkelbereiche beispielsweise die Form von vom Gerät ausgehenden, nach aussen offenen Kugelsektoren. Bei einer grossen Anzahl an Raumwinkelbereichen wird somit der Öffnungswinkel der einzelnen Raumwinkelbereiche im Durchschnitt immer geringer. Bei einer Vielzahl von Raumwinkelbereichen ist somit auch eine Vielzahl verschiedener Tonmuster für die Signalisierung der Empfangsrichtung notwendig, was auch zu einer Verwirrung und Unklarheiten beim Suchenden führen kann. Die Anzahl der unterscheidbaren Raumwinkelbereiche sollte daher nicht zu gross gewählt werden. Bei 10 solchen Raumwinkelbereichen ergibt sich ein durchschnittlicher Öffnungswinkel der einzelnen Bereiche von 36 Grad. Der Öffnungswinkel jedes Raumwinkelbereichs sollte somit bevorzugt nicht weniger als ca. 20 Grad, mit Vorteil nicht weniger als ca. 30 Grad betragen.

Vorzugsweise sind Öffnungswinkel und/oder Anzahl der Raumwinkelbereiche dynamisch anpassbar. Durch eine dynamische Anpassung der Öffnungswinkel der Raumwinkelbereiche während eines Suchvorgangs können die Raumwinkelbereiche den spezifischen Anforderungen einer Suchsituation angepasst werden. So kann beispielsweise der Öffnungswinkel des vorderen Raumwinkelbereichs mit abnehmender Distanz vom Sendeort verkleinert werden. Gleichzeitig mitdieserVerkleinerung können beispielsweise an den vorderen Raumwinkelbereich angrenzende Raumwinkelbereiche dynamisch angepasst werden, indem ihr Öffnungswinkel ebenfalls verkleinert wird, oder indem ihr Öffnungswinkel vergrössertwird, um die dynamische Änderung des Öffnungswinkels des vorderen Raumwinkelbereichs zu kompensieren. Weiter kann auch die Ausrichtung der an den vorderen Raumwinkelbereich angrenzenden Raumwinkelbereiche dynamisch angepasst werden. Alle diese dynamischen Änderungen haben den Vorteil, dass der Suchende mit abnehmender Distanz vom Sendeort präzisergeführtwerden kann. Es besteht aber auch die Möglichkeit, eine Anzahl Raumwinkelbereiche und damit eine Anzahl der durch den Signalgenerator erzeugbaren Tonmuster dynamisch anzupassen. Dadurch können beispielsweise die Öffnungswinkel der Raumwinkelbereiche mit abnehmender Distanz vom Sendeort verkleinert werden, wobei die Verkleinerung des durch die Raumwinkelbereiche abgedeckten Raums durch eine Erhöhung der Anzahl Raumwinkelbereiche kompensiert wird.

Selbstverständlich besteht aber auch die Möglichkeit, dass der Öffnungswinkel des vorderen Raumwinkelbereichs mit abnehmender Distanz vom Sendeort vergrössert wird.

Als weitere Variante besteht die Möglichkeit, dass bei Suchanfang der Raum um das Lawinen-Verschütteten-Suchgerät in gleichmässig verteilte Raumwinkelbereiche mit gleichem Öffnungswinkel unterteilt ist. Sobald ein Sendesignal angepeilt ist und vom Suchenden ein Suchvorgang nach der Empfangsrichtung dieses Sendesignals eingeleitet ist, wobei das Lawinen-Verschütteten-Suchgerät vom Suchenden derart orientiert ist, dass die Empfangsrichtung in einem vorderen Raumwinkelbereich liegt, können die Öffnungswinkel des vorderen Raumwinkelbereichs und von in unmittelbarerer und gegebenenfalls in nächster beziehungsweise übernächster Nachbarschaft dieses vorderen Raumwinkelbereichs liegenden Raumwinkelbereiche sukzessive verkleinert werden. Gleichzeitig kann beispielsweise der Öffnungswinkel eines hinteren Raumwinkelbereichs vergrössert werden, damit der gesamte das Lawinen-Verschütteten-Suchgerät umgebende Raum durch einen Raumwinkelbereich abgedeckt ist. Dabei können aber auch während dieses Vorgangs weitere Raumwinkelbereiche und gegebenenfalls entsprechende Tonmuster hinzugefügt werden, um den gesamten Raum um das Lawinen-Verschütteten-Suchgerät abzudecken.

Vorzugsweise unterscheiden sich die durch den Signalgenerator erzeugbaren Tonmuster in wenigstens einem der Merkmale Tonfrequenz, Wiederholrate von periodisch wiederholten Einzeltönen, Dauer der Einzeltöne von periodisch wiederholten Einzeltöne sowie Lautstärke. Ein Tonmuster kann auch Doppeltöne oder Mehrfachtöne umfassen, wobei sich deren einzelne Töne wiederum in den genannten Merkmalen unterscheiden können. Selbstverständlich ist auch eine zeitliche Variation einzelner oder mehrerer Merkmale innerhalb eines Tonmusters möglich.

Beispielsweise unterscheiden sich die durch den Signalgenerator erzeugbaren Tonmuster in Ihrer Tonfrequenz. Dies hat den Vorteil, dass die Tonmuster für den Suchenden einfach identifizierbar sind und dass somit der Raumwinkelbereich, in welchem die Empfangsrichtung liegt, einfach bestimmbar ist. Es besteht aber auch die Möglichkeit, dass sich die durch den Signalgenerator erzeugbaren Tonmuster nicht in Ihrer Tonfrequenz unterscheiden.

Es ist aber auch möglich, dass durch den Signalgenerator wenigstens ein Tonmuster erzeugbar ist, welches periodisch wiederholte Einzeltöne umfasst. Dies hat den Vorteil, dass dieses wenigstens eine Tonmuster leicht von den anderen Tonmustern unterscheidbar ist. Alternativ dazu besteht aber auch die Möglichkeit, dass durch den Signalgenerator nur Tonmuster erzeugbar sind, welche periodisch wiederholte Einzeltöne umfassen.

Weiter besteht die Möglichkeit, dass durch den Signalgenerator mehr als ein Tonmuster erzeugbar sind, welche periodisch wiederholte Einzeltöne umfassen, wobei sich bei diesen Tonmustern eine Wiederholrate der Einzeltöne unterscheidet. Dies hat den Vorteil, dass diese mehr als ein Tonmuster, welche periodisch wiederholte Einzeltöne umfassen, leicht voneinander unterscheidbar sind.

Auch können durch den Signalgenerator mehr als ein Tonmuster erzeugbar sein, welche periodisch wiederholte Einzeltöne umfassen, wobei sich bei diesen Tonmustern eine Dauer der Einzeltöne unterscheidet. Dies hat den Vorteil, dass diese mehr als ein Tonmuster, welche periodisch wiederholte Einzeltöne umfassen, leicht voneinander unterscheidbar sind.

Als weitere Variante können sich die durch den Signalgenerator erzeugbaren Tonmuster in Ihrer Lautstärke unterscheiden. Dies hat den Vorteil, dass die einzelnen Tonmuster gut voneinander unterscheidbar sind.

Vorzugsweise unterscheiden sich die durch den Signalgenerator erzeugbaren Tonmuster in einer Kombination der Parameter Tonfrequenz, Wiederholrate von Einzeltönen, Dauer der Einzeltöne und der Lautstärke. So können sich die Tonmuster beispielsweise intuitiv derart unterscheiden, dass, wenn die Empfangsrichtung durch die Verarbeitungseinheit dem hinteren Raumwinkelbereich zugeordnet ist, ein Tonmuster erzeugbar ist, welches aus einem mässig lauten, langem Tuten mit langsamer Wiederholung und tiefer Tonfrequenz besteht. Wenn die Empfangsrichtung hingegen dem vorderen Raumwinkelbereich zugeordnet ist, so kann beispielsweise ein Tonmuster erzeugbar sein, welches aus einem lauten, kurzen Piepsen mit rascher Wiederholung und hoher Tonfrequenz besteht. Weiter können beispielsweise dazwischenliegende Tonmuster erzeugbar sein, wenn die Empfangsrichtung einem von wenigstens einem dazwischenliegenden, seitlichen Raumwinkelbereich zugeordnet ist. Dies hat den Vorteil, dass der Suchende die Empfangsrichtung intuitiv aus dem durch den Signalgenerator erzeugten Tonmuster ablesen kann.

Unter dem Begriff Tonmuster soll im Rahmen dieser Beschreibung auch ein leeres oder stilles bzw. unhörbares Tonmuster verstanden werden, das keinerlei Töne umfasst. Dies ist beispielsweise dann der Fall, wenn der Signalgenerator still bleiben, d. h. kein bzw. ein unhörbares, akustisches Signal erzeugen soll, wenn die Empfangsrichtung einem oder mehreren bestimmten Raumwinkelbereichen zugeordnet worden ist.

Vorteilhafterweise umfasst das Lawinen-Verschütteten-Suchgerät eine Anzeige zur optischen Darstellung der Empfangsrichtung, wobei die Empfangsrichtung gleichzeitig zur akustischen Signalisation durch die Tonmuster auch optisch durch die Anzeige darstellbar ist. Dies hat den Vorteil, dass beispielsweise die Empfangsrichtung durch die optische Anzeige präzise angegeben werden kann, während durch das Tonmuster nur der Raumwinkel der Empfangsrichtung angezeigt wird. Dies hat den Vorteil, dass sich der Suchende beispielsweise stehend kurz durch die optische Anzeige über die präzise Empfangsrichtung informieren kann und sich dann etwas in diese Richtung bewegen kann, wobei er bei dieser Bewegung akustisch durch das Tonmuster geführt wird, während er sich optisch auf seine Bewegung im Gelände konzentrieren kann. Da das Tonmuster wechselt, wenn die Empfangsrichtung von der Verarbeitungseinheit einem anderen Raumwinkelbereich zugeordnet wird, wird dem Suchenden sofort signalisiert, falls er mit seiner Bewegung von der Empfangsrichtung abweichen sollte. Unabhängig davon kann der Suchende nach einer kurzen Distanz wieder kurz stoppen und sich wiederum durch die optische Anzeige über die präzise Empfangsrichtung informieren.

Es besteht die Möglichkeit, dass die optische Anzeige und die akustische Anzeige durch das Tonmuster zu unterschiedlichen Zeitpunkten an die aktuelle Empfangsrichtung angepasst werden. Es besteht aber auch die Möglichkeit, dass die optische und die akustische Anzeige synchron angepasst werden, oder dass gänzlich auf eine optische Anzeige verzichtet wird.

Vorzugsweise ist die Empfangseinheit zum Empfangen eines Sendesignals, welches einen mit einer bestimmten Sendepuls-Periode ausgestrahlten Sendepuls einer bestimmten Sendefrequenz umfasst, ausgebildet. Weiter umfasst das Lawinen-Verschütteten-Suchgerät vorzugsweise Lagebestimmungsmittel zur Ermittlung einer Lage des Lawinen-Verschütteten-Suchgeräts auch während Totzeiten zwischen zwei empfangenen Sendepulsen sowie eine Speichereinheit zum Speichern einer zuletzt ermittelten Empfangsrichtung. Dabei ist vorzugsweise durch die Verarbeitungseinheit aufgrund von aktuellen Lagedaten zur Lage des Lawinen-Verschütteten-Suchgeräts und der in der Speichereinheit gespeicherten Empfangsrichtung periodisch eine nachgeführte Empfangsrichtung bestimmbar, wobei vorzugsweise die nachgeführte Empfangsrichtung einem Raumwinkelbereich zuordenbar ist. Zudem ist vorzugsweise durch den akustischen Signalgenerator abhängig vom Raumwinkelbereich, welchem die nachgeführte Empfangsrichtung durch die Verarbeitungseinheit zugeordnet ist, ein Tonmuster erzeugbar.

Falls es sich beim Lawinen-Verschütteten-Suchgerät beispielsweise um ein LVS handelt, dessen Sendesignal gemäss dem European Telecom Standard ETS 300718, Radio Equipment and Systems (RES) und Avalanche Beacons, Transmitter-receiver systems, ET-Sl March 1997, Sendepulse mit einer Wiederholrate von 1 Hz und einem Duty-Cycle von etwa 10 - 30% umfasst, so bestehen zwischen den Sendepulsen sogenannte Totzeiten, während denen von einem LVS im Sendemodus kein Sendesignal gesendet wird. Da sich somit in diesem Fall von einem LVS im Suchmodus die effektive Empfangsrichtung höchstens jede Sekunde während eines Sendepulses bestimmen lässt, kann durch eine entsprechende Nachführung der Empfangsrichtung eine präzisere, aktuellere Anzeige der Empfangsrichtung erfolgen. Dazu umfasst das Lawinen-Verschütteten-Suchgerät vorzugsweise Lagebestimmungsmittel zur Ermittlung einer Lage des Lawinen-Verschütteten-Suchgeräts auch während den Totzeiten zwischen zwei empfangenen Sendepulsen. Dabei handelt es sich vorzugsweise um Lagebestimmungsmittel, welche die Lage des Lawinen-Verschütteten-Suchgeräts zu einem Geräte-externen Referenzsystem bestimmen. Beispielsweise kann es sich um einen Magnetfeldsensor handeln, welcher die Lage des Lawinen-Verschütteten-Suchgeräts zu einem Magnetfeld, insbesondere dem Erdmagnetfeld, bestimmt. Durch solche Lagebestimmungsmittel sind auch während Totzeiten zwischen Sendepulsen aktuelle Lagedaten des Lawinen-Verschütteten-Suchgeräts bestimmbar und die Empfangsrichtung kann aufgrund dieser aktuellen Lagedaten seit der letzten Bestimmung und Speicherung der Empfangsrichtung nachgeführt werden, indem durch die Verarbeitungseinheit die Lageänderung des Lawinen-Verschütteten-Suchgeräts seit der letzten bestimmten und gespeicherten Empfangsrichtung berücksichtigt wird.

Dieses Vorgehen wird beispielsweise bereits in der EP 1 785 169 A1 (Ascom (Schweiz) AG) für eine Aktualisierung der optischen Richtungsdarstellung beschrieben. Im Gegensatz zur EP 1 785 169 A1 wird hier jedoch nicht von einer "Aktualisierung der Richtungsdarstellung", sondern von einer "nachgeführten Empfangsrichtung" gesprochen. Dabei handelt es sich aber im Wesentlichen um dieselbe Vorgehensweise, wobei aber hier vorteilhafterweise die nachgeführte Empfangsrichtung einem Raumwinkelbereich zugeordnet und durch den Signalgenerator das entsprechende Tonmuster erzeugt wird.

Als Variante dazu besteht aber auch die Möglichkeit, dass auf einer möglicherweise vorhandenen optischen Anzeige wie in der EP 1 785 169 A1 (Ascom (Schweiz) AG) beschrieben eine Aktualisierung der Richtungsdarstellung seit Ermittlung der zwischengespeicherten Empfangsrichtung erfolgt. Dabei besteht die Möglichkeit, dass gleichzeitig auch die Empfangsrichtung nachgeführt und einem Raumwinkelbereich zugeordnet wird, wobei durch den Signalgenerator das entsprechende, nachgeführte Tonmuster erzeugbar ist. Es besteht dabei aber auch die Möglichkeit, dass die Empfangsrichtung trotz Aktualisierung der Richtungsdarstellung auf der optischen Anzeige nur jeweils durch die Empfangseinheit beim Empfangen eines Sendepulses bestimmt und durch die Verarbeitungseinheit einem Raumwinkel zugeordnet wird. Entsprechend wird in diesem Fall die optische Anzeige auch während Totzeiten zwischen einzelnen Sendesignal-Pulsen nachgeführt, während das akustische Tonmuster nur bei Empfang von einem Sendesignal-Puls aktualisiert wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines Such- und Sendegeräts,
- Fig. 2: eine schematische Darstellung der Raumwinkelbereiche, in welche der Raum um das Such- und Sendegerät unterteilt ist und
- Fig. 3: eine schematische Darstellung eines weiteren Such- und Sendegeräts, bei welchem es sich um ein erfindungsgemässes Lawinen-Verschütteten-Suchgerät handeln kann, mit den Raumwinkelbereichen, in welche der Raum um das Such- und Sendegerät unterteilt ist.

Grundsätzlich sind in den Figuren gleiche Teile mit gleichen Bezugszeichen versehen.

### Wege zur Ausführung der Erfindung

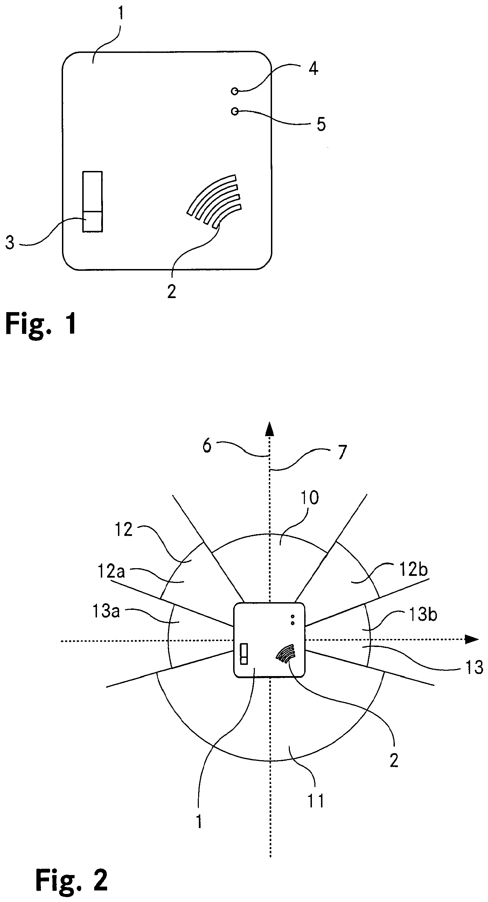

Figur 1 zeigt eine schematische Darstellung eines möglichen Ausführungsbeispiels eines Such- und Sendegeräts 1. Das gezeigte Such- und Sendegerät 1 umfasst einen akustischen Signalgenerator mit einem Lautsprecher 2 und einen Schalter 3, mit welchem das Such- und Sendegerät 1 eingeschalten oder ausgeschalten werden kann und mit welchem das Such- und Sendegerät 1 im eingeschalteten Zustand in einen Sendemodus oder in einen Suchmodus geschalten werden kann. Damit ein Benutzer des Such- und Sendegeräts 1 erkennen kann, ob das Such- und Sendegerät 1 eingeschalten ist und ob es sich im Suchmodus oder im Sendemodus befindet, umfasst das Such- und Sendegerät 1 als Anzeige zwei Leuchtdioden 4, 5. Weiter umfasst das Such- und Sendegerät 1 eine Sendeeinheit (nicht gezeigt), mittels welcher ein Sendesignal gesendet werden kann, wenn sich dass Such- und Sendegerät 1 im Sendemodus befindet. Bei diesem Sendesignal kann es sich beispielsweise um ein Signal handeln, welches dem European Telecom Standard ETS 300718, Radio Equipment and Systems (RES) und Avalanche Beacons, Transmitter-receiver systems, ETSI March 1997, entspricht und somit eine Frequenz von 457 kHz aufweist, und einzelne Sendepulse mit einer Wiederholrate von 1 Hz und einem Duty-Cycle von etwa 10 - 30% umfasst.

Weiter umfasst das Such- und Sendegerät 1 eine Empfangseinheit (nicht gezeigt), welche wie in der EP 1 439 400 A2 (Seidel Elektronik GmbH Nfg. KG) beschrieben drei Antennen umfasst, womit die Empfangsrichtung eines Sendesignals bestimmbar ist. Das Such- und Sendegerät 1 könnte aber auch derart ausgebildet sein, dass die Empfangseinheit wie in der EP 0 855 600 A2 (John W. Hereford & Michael X. Bond) beschrieben zwei Antennen sowie eine virtuelle Antenne umfasst, durch welche die Empfangsrichtung bestimmbar ist. Weiter könnte das Such- und Sendegerät 1 aber auch derart ausgebildet sein, dass die Empfangseinheit eine einzige Antenne umfasst, welche wie ein Radar rotiert und entsprechend eine Bestimmung der Empfangsrichtung ermöglicht. Es könnte aber auch sein, dass die Empfangseinheit in einer Ausführungsform zur Bestimmung der Empfangsrichtung mehr als drei Antennen umfasst.

Für die Weiterverarbeitung der Empfangsrichtung umfasst das Such- und Sendegerät 1 eine Verarbeitungseinheit (nicht gezeigt). Wie in Figur 2 schematisch dargestellt, wird der Raum, welcher das Such- und Sendegerät 1 umgibt, durch diese Verarbeitungseinheit in Raumwinkelbereiche 10, 11, 12, und 13 unterteilt. Diese Raumwinkel 10, 11, 12 und 13 haben zum Zweck, dass Ihnen die von der Empfangseinheit bestimmte Empfangsrichtung durch die Verarbeitungseinheit zuordenbar ist. Dabei kann man sich die Empfangsrichtung als Pfeil vorstellen, welcher von einem Zentrum des Such- und Sendegeräts 1 in eine bestimmte Richtung im Raum um das Such- und Sendegerät 1 zeigt. In diesem Bild sind die Raumwinkelbereiche 10, 11, 12, und 13 derart definiert, dass sie je durch einen Raumwinkel, welcher von einem Zentrum des Such- und Sendegeräts 1, das dem Ursprung des Pfeils entspricht, ausgeht, im Raum um das Such- und Sendegerät 1 aufgespannt werden. Dabei können die Öffnungswinkel der Raumwinkelbereiche 10, 11, 12, und 13 unterschiedlich gross sein. Zudem können die Raumwinkelbereiche 10, 11, 12, und 13 in unterschiedliche Richtungen im Raum um das Such- und Sendegerät 1 geöffnet sein. Wenn nun der Pfeil der Empfangsrichtung in einem dieser Raumwinkelbereiche 10, 11,12, und 13 liegt, dann ist die Empfangsrichtung durch dieVerarbeitungseinheitdiesem Raumwinkelbereich 10, 11, 12, und 13 zuordenbar.

In der Figur 2 ist eine vom Such- und Sendegerät 1 aus gesehene Richtung als Vorwärtsrichtung 6 definiert. Um diese Vorwärtsrichtung 6 herum istein vorderer Raumwinkelbereich 10 definiert, welcher im vorliegenden Ausführungsbeispiel einen Öffnungswinkel von 70 Grad aufweist. Wenn sich nun das Such- und Sendegerät 1 im Suchmodus befindet und die von der Empfangseinheit bestimmte Empfangsrichtung eines Sendesignals von der Verarbeitungseinheit dem vorderen Raumwinkelbereich 10 zugeordnet wird, so wird der akustische Signalgenerator von der Verarbeitungseinheit dazu angewiesen, durch den Lautsprecher2 ein erstes Tonmuster zu erzeugen. Dieses erste Tonmuster kann beispielsweise aus lauten, sich rasch wiederholenden, kurzen Piepstönen von hoher Tonfrequenz bestehen. Dadurch wird dem Suchenden, welcher das Such-und Sendegerät 1 benutzt, angezeigt, dass die Empfangsrichtung im vorderen Raumwinkelbereich 10 liegt.

Vom Such- und Sendegerät 1 her gesehen ist die der Vorwärtsrichtung 6 entgegengesetzte Richtung als Rückwärtsrichtung definiert. Um diese Rückwärtsrichtung herum ist ein hinterer Raumwinkelbereich 11 definiert, welcher im vorliegenden Ausführungsbeispiel einen Öffnungswinkel von 150 Grad aufweist. Wenn sich nun das Such- und Sendegerät 1 im Suchmodus befindet und die von der Empfangseinheit bestimmte Empfangsrichtung eines Sendesignals von der Verarbeitungseinheit dem hinteren Raumwinkelbereich 11 zugeordnet wird, so wird der akustische Signalgenerator von der Verarbeitungseinheit dazu angewiesen, durch den Lautsprecher 2 ein zweites Tonmuster zu erzeugen. Dieses zweite Tonmuster kann beispielsweise aus mässig lauten, sich mit langsamer Wiederholrate wiederholenden, langen Tönen mit tiefer Tonfrequenz bestehen. Dadurch wird dem Suchenden angezeigt, dass die Empfangsrichtung des Sendesignals im hinteren Raumwinkelbereich 11 liegt.

Der Bereich des Raums, welcher zwischen dem vorderen und dem hinteren Raumwinkelbereich 10, 11 liegt, ist ebenfalls in Raumwinkelbereiche 12, 13 unterteilt. Dabei besteht zwar die Möglichkeit, dass dieser Bereich des Raums genau einen seitlichen Raumwinkelbereich definiert. Es besteht aber auch die Möglichkeit, dass dieser Bereich des Raums in zwei oder mehr seitliche Raumwinkelbereiche unterteilt ist. Im vorliegenden Ausführungsbeispiel ist der Raum in genau zwei seitliche Raumwinkelbereiche 12, 13 unterteilt. Dabei ist eine von der Rückwärtsrichtung zur Vorwärtsrichtung 6 verlaufende Achse 7 definiert, welche die beiden seitlichen Raumwinkelbereiche 12, 13 je in zwei symmetrisch um diese Achse 7 angeordnete Teilraumwinkelbereiche 12a, 12b beziehungsweise 13a und 13b unterteilt. Wenn die Empfangsrichtung von der Verarbeitungseinheit einem Teilraumwinkelbereich 12a, 12bdes ersten seitlichen Raumwinkelbereichs 12 zugeordnet wird, so wird der akustische Signalgenerator von der Verarbeitungseinheit dazu angewiesen, durch den Lautsprecher 2 ein drittes Tonmuster zu erzeugen. Da die beiden Teilraumwinkelbereiche 12a, 12b je auf einer Seite des vorderen Raumwinkelbereichs 10 an den vorderen Raumwinkelbereich 10 angrenzen, besteht das dritte Tonmuster beispielsweise aus lauten, sich einigermassen rasch wiederholenden, kurzen Piepstönen mit mässig hoher Tonfrequenz. Damit unterscheidet sich das dritte Tonmuster vom ersten Tonmuster, indem die Tonfrequenz etwas tiefer ist und indem die Wiederholrate der einzelnen Töne etwas langsamer ist. Dadurch wird dem Suchenden, welcher das Such- und Sendegerät 1 benutzt, angezeigt, dass die Empfangsrichtung im ersten seitlichen Raumwinkelbereich 12 und damit nahe dem vorderen Raumwinkelbereich 10 liegt.

Wenn hingegen die Empfangsrichtung von der Verarbeitungseinheit einem Teilraumwinkelbereich 13a, 13b des zweiten seitlichen Raumwinkelbereichs 13 zugeordnet wird, so wird der akustische Signalgenerator von der Verarbeitungseinheit dazu angewiesen, durch den Lautsprecher 2 ein viertes Tonmuster zu erzeugen. Da die beiden Teilraumwinkelbereiche 13a, 13b je auf einer Seite des hinteren Raumwinkelbereichs 11 an den hinteren Raumwinkelbereich 11 angrenzen, besteht das vierte Tonmuster beispielsweise aus mässig lauten, sich wiederholenden, kurzen Tönen von mittelhoher Tonfrequenz. Damit liegen die charakteristischen Parameter des vierten Tonmusters zwischen den Parametern des dritten Tonmusters und des zweiten Tonmusters. Entsprechend wird dem Suchenden, welcher das Such- und Sendegerät 1 benutzt, angezeigt, dass die Empfangsrichtung im zweiten seitlichen Raumwinkelbereich 13 und damit deutlich weg vom vorderen Raumwinkelbereich 10 liegt.

Selbstverständlich besteht die Möglichkeit, dass eines, mehrere, oder alle seitlichen Raumwinkelbereiche nicht je aus zwei symmetrisch um die Achse 7 angeordneten Teilraumwinkelbereichen bestehen. Die seitlichen Raumwinkelbereiche können jeweils auch nur auf einer Seite der Achse 7 liegen. In diesem Fall wird ermöglicht, dass durch entsprechende Tonmuster angezeigt werden kann, auf welcher Seite des vorderen Raumwinkelbereichs 10 beziehungsweise der Achse 7 die Empfangsrichtung liegt.

Weiter besteht auch die Möglichkeit, dass das Such-und Sendegerät 1 nebst dem Lautsprecher 2 einen Steckplatz (nicht gezeigt) für Kopfhörer umfasst, durch welche die durch den akustischen Signalgenerator erzeugten Tonmuster angezeigt werden können. Dabei besteht auch die Möglichkeit, dass das Such- und Sendegerät 1 nur einen Steckplatz für Kopfhörer und keinen Lautsprecher 2 umfasst.

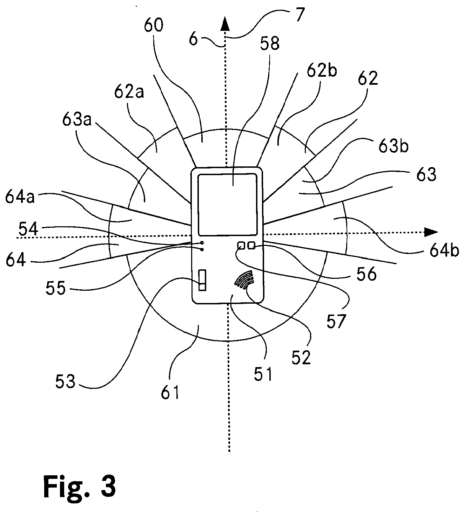

Figur 3 zeigt eine schematische Darstellung eines weiteren Ausführungsbeispiels eines Such- und Sendegeräts 51, bei welchem es sich um ein erfindungsgemässes Lawinen-Verschütteten-Suchgerät handeln kann. Wie bereits das in den Figuren 1 und 2 gezeigte Such- und Sendegerät 1 umfasst das hier gezeigte Such- und Sendegerät 51 einen akustischen Signalgenerator miteinem Lautsprecher 52, einen Schalter 53 zum Ein- und Ausschalten des Such- und Sendegeräts 51 sowie zum Einstellen des Suchmodus oder des Sendemodus. Weiter umfasst das Such- und Sendegerät 51 zwei Leuchtdioden 54, 55 zur Anzeige des Suchmodus oder des Sendemodus. Zusätzlich zum in Figuren 1 und 2 gezeigten Such- und Sendegerät 1 umfasst das hiergezeigte Such-und Sendegerät 51 jedoch eine optische Anzeige 58. In dieser optischen Anzeige 58 kann die von der Empfangseinheit (nicht gezeigt) bestimmte Empfangsrichtung dargestellt werden. Zudem können auch verschiedene weitere Informationen wie beispielsweise die Temperatur, die Suchdauer oder der Luftdruck und die Höhe angezeigt werden. Auch kann im Suchmodus die Distanz zum Sendesignal angezeigt werden. Um die gewünschte Anzeige einzustellen und/oder um zwischen verschiedenen Betriebsmoden des Such- und Sendegeräts 51 umschalten zu können, weist das Such- und Sendegerät 51 zudem zwei Knöpfe 56, 57 auf.

Das in Figur 3 gezeigte Such- und Sendegerät 51 kann aber auch abgeändert werden. Beispielsweise kann der Suchmodus und/oder Sendemodus in der optischen Anzeige 58 angezeigt werden, wodurch die zwei Leuchtdioden 54, 55 weggelassen werden können.

Wie bereits beim in Figuren 1 und 2 dargestellten Such- und Sendegerät 1 wird im hier gezeigten Such-und Sendegerät 51 durch die Verarbeitungseinheit der Raum um das Such- und Sendegerät 51 in Raumwinkelbereiche 60, 61, 62, 63 und 64 unterteilt. Im hier gezeigten Ausführungsbeispiel weist der in Vorwärtsrichtung 6 ausgerichtete vordere Raumwinkelbereich 60jedoch nur einen Öffnungswinkel von 50 Grad auf, während der in Rückwärtsrichtung ausgerichtete hintere Raumwinkelbereich 61 einen Öffnungswinkel von 160 Grad aufweist. Der zwischen dem vorderen und dem hinteren Raumwinkelbereich 60, 61 liegende Raum ist in drei seitliche Raumwinkelbereiche 62, 63 und 64 unterteilt. Diese seitlichen Raumwinkelbereiche 62, 63 und 64 umfassen je zwei symmetrisch um die Achse 7 angeordnete Teilraumwinkelbereiche 62a und 62b, 63a und 63b, beziehungsweise 64a und 64b, welche jeweils einen Öffnungswinkel von 25 Grad aufweisen.

Da somit der Raum um das Such- und Sendegerät51 in insgesamt fünf Raumwinkelbereiche unterteilt ist, kann der akustische Signalgenerator fünf verschiedene Tonmuster erzeugen, welche anzeigen, welchem der fünf Raumwinkelbereiche die von der Empfangseinheit bestimmte Empfangsrichtung des Sendesignals durch die Verarbeitungseinheit zugeordnet ist.

In der optischen Anzeige 58 kann wie bereits erwähnt die von der Empfangseinheit bestimmte Empfangsrichtung präzise angezeigt werden. Als Abwandlung davon könnte die von der Empfangseinheit bestimmte Empfangsrichtung auch nur durch den Raumwinkelbereich 60, 61, 62, 63 oder 64 angezeigt werden, in welchem die Empfangsrichtung liegt.

Falls es sich beim Such- und Sendegerät 51 beispielsweise um ein LVS handelt, dessen Sendesignal gemäss dem European Telecom Standard ETS 300718, Radio Equipment and Systems (RES) und Avalanche Beacons, Transmitter-receiver systems, ETSI March 1997, Sendepulse mit einer Frequenz von 457kHz und einer Wiederholrate von 1 Hz sowie einem Duty-Cycle von etwa 10 - 30% umfasst, so bestehen zwischen den Sendepulsen sogenannte Totzeiten, während denen von einem LVS im Sendemodus kein Sendesignal gesendet wird. Da sich somit in diesem Fall vom Such- und Sendegerät 51 im Suchmodus die effektive Empfangsrichtung höchstens jede Sekunde während eines Sendepulses bestimmen lässt, kann durch eine entsprechende Nachführung der Empfangsrichtung eine präzisere, aktuellere Anzeige der Empfangsrichtung erfolgen. Um dies zu erreichen, kann wie in der EP 1 785 169 A1 (Ascom (Schweiz) AG) beschrieben eine Aktualisierung der in der optischen Anzeige 58 dargestellte Richtungsdarstellung seit der zuletzt ermittelten Empfangsrichtung erfolgen. Dafür umfasst das Such- und Sendegerät 51 eine Speichereinheit zur Speicherung der zuletzt bestimmten Empfangsrichtung (nicht gezeigt) sowie Lagebestimmungsmittel (nicht gezeigt) zur Ermittlung einer Lage des Such- und Sendegeräts 51 auch während den Totzeiten zwischen zwei empfangenen Sendepulsen. Bei diesen Lagebestimmungsmittel handelt es sich um einen Magnetfeldsensor, welcher die Lage des Such- und Sendegeräts 51 zum Erdmagnetfeld bestimmt. Es könnte sich bei den Lagebestimmungsmittel aber beispielsweise auch um einen Global-Positioning-System (GPS)-Sensor handeln, welcher die Lage des Such- und Sendegeräts 51 zu den geographischen Längen- und Breitengraden bestimmt. Wichtig ist einzig, dass die Lagebestimmungsmittel die Lage des Such- und Sendegeräts 51 zu einem Geräte-externen Referenzsystem bestimmen.

Durch das Lagebestimmungsmittel sind auch während Totzeiten zwischen Sendepulsen aktuelle Lagedaten des Such- und Sendegeräts 51 bestimmbar und die Empfangsrichtung kann aufgrund dieser aktuellen Lagedaten seitder letzten Bestimmung und Speicherung der Empfangsrichtung nachgeführt werden, indem durch die Verarbeitungseinheit die Lageänderung des Such-und Sendegeräts 51 seit der zuletzt bestimmten und gespeicherten Empfangsrichtung berücksichtigt wird. Dadurch kann eine ruckelfreie Anzeige der Empfangsrichtung erreicht werden.

Im Such- und Sendegerät 51 wird gleichzeitig zur Aktualisierung der Richtungsdarstellung in der optischen Anzeige 58 zwischen den empfangenen Sendepulsen auch die Empfangsrichtung nachgeführt und jeweils einem Raumwinkelbereich zugeordnet, wobei durch den Signalgenerator das entsprechende, nachgeführte Tonmuster erzeugt wird. Das Such- und Sendegerät 51 könnte in einer anderen Ausführungsform aber auch derart ausgebildet sein, dass die Empfangsrichtung trotz Aktualisierung der Richtungsdarstellung auf der optischen Anzeige 58 nur jeweils durch die Empfangseinheit beim Empfangen eines Sendepulses bestimmt und durch die Verarbeitungseinheit einem Raumwinkel zugeordnet wird. Entsprechend würde in diesem Fall die optische Anzeige 58 auch während Totzeiten zwischen einzelnen Sendesignal-Pulsen nachgeführt, während das akustische Tonmuster nur bei Empfang von einem Sendesignal-Puls aktualisiert würde.

Selbstverständlich besteht auch die Möglichkeit, dass das in Figuren 1 und 2 dargestellte Such- und Sendegerät 1 eine oben beschriebene Nachführung der Empfangsrichtung ermöglicht und entsprechend nachgeführte Tonmuster erzeugen kann. Dazu sollte das Such- und Sendegerät 1 jedoch mit einem entsprechenden Lagebestimmungsmittel und einer Speichereinheit zum Speichern der zuletztermittelten Empfangsrichtung ausgerüstet sein.

Da bei einem Suchvorgang möglicherweise vom Such- und Sendegerät Sendesignale von mehreren Sendern empfangen wird, kann das Such- und Sendegerät zudem derart ausgebildet sein, dass ein Sendesignal eines bestimmten Senders angepeilt werden kann. Wenn das Such- und Sendegerät beispielsweise wie das in Figur 3 gezeigte Such- und Sendegerät 51 über eine optische Anzeige 58 verfügt, so können darin beispielsweise alle empfangenen Sendesignale angezeigt werden. Dabei sollte es aber für den Suchenden möglich sein, dass er eines dieser Sendesignale auswählen kann und sich nur noch die Empfangsrichtung dieses einen Sendesignals (akustisch und/oder optisch) anzeigen lassen kann. Dadurch kann sich der Suchende für den Suchvorgang auf einen bestimmten Sender konzentrieren. Sobald er den Sender gefunden hat, kann er die angezeigte Empfangsrichtung auf ein anderes Sendesignal umschalten und entsprechend den Suchvorgang für dieses weitere Sendesignal wiederholen.

Zusammenfassend ist festzustellen, dass ein Such- und Sendegerät sowie ein entsprechendes Verfahren geschaffen wird, welches den Suchvorgang vereinfacht, damit ein Suchender den Suchvorgang schneller erfolgreich zu Ende führen kann.

## Patentansprüche

1. Lawinen-Verschütteten-Suchgerät, umfassend:
a) eine Empfangseinheit zum Bestimmen einer Empfangsrichtung eines Sendesignals,
b) eine Verarbeitungseinheit und
c) einen akustischen Signalgenerator,
**dadurch gekennzeichnet, dass**
d) die Empfangsrichtung durch die Verarbeitungseinheit einem von 3, 4, 5, 6, 7, 8, 9 oder 10 Raumwinkelbereichen (10, 11, 12, 13, 60, 61, 62, 63, 64) um das Lawinen-Verschütteten-Suchgerät zuordenbar ist, und
e) durch den akustischen Signalgenerator abhängig von dem der Empfangsrichtung zugeordneten Raumwinkelbereich (10, 11, 12, 13, 60, 61, 62, 63, 64) eines von wenigstens drei Tonmustern erzeugbar ist, wobei
f) durch den Signalgenerator ein erstes Tonmuster erzeugbar ist, wenn die von der Empfangseinheit bestimmte Empfangsrichtung in einem vorderen Raumwinkelbereich (10, 60) liegt, welcher in eine Vorwärtsrichtung (6) des Lawinen-Verschütteten-Suchgeräts gerichtet ist, wobei
g) durch den Signalgenerator ein zweites Tonmuster erzeugbar ist, wenn die von der Empfangseinheit bestimmte Empfangsrichtung in einem hinteren Raumwinkelbereich (11, 61) liegt, welcher in eine Rückwärtsrichtung des Lawinen-Verschütteten-Suchgeräts gerichtet ist, wobei sich das zweite Tonmuster vom ersten Tonmuster unterscheidet, und wobei
h) durch den Signalgenerator ein drittes Tonmuster erzeugbar ist, wenn die von der Empfangseinheit bestimmte Empfangsrichtung in einem von wenigstens einem seitlichen Raumwinkelbereich ( 12, 13, 62, 63, 64) liegt, welcher ausserhalb des vorderen und ausserhalb des hinteren Raumwinkelbereichs (10, 60, 11, 61) liegt, wobei sich das dritte Tonmuster vom ersten und vom zweiten Tonmuster unterscheidet.

2. Lawinen-Verschütteten-Suchgerät nach Anspruch 1, **dadurch gekennzeichnet, dass** wenigstens ein seitlicher Raumwinkelbereich (12, 13, 62, 63, 64) zwei Teilwinkelbereiche (12a, 12b, 13a, 13b, 62a, 62b, 63a, 63b, 64a, 64b) umfasst, welche in Bezug auf eine von der Rückwärtsrichtung zur Vorwärtsrichtung (6) verlaufend definierte Achse (7) des Lawinen-Verschütteten-Suchgerät oder eine durch diese Achse (7) verlaufende Ebene symmetrisch angeordnet sind.

3. Lawinen-Verschütteten-Suchgerät nach Anspruch 4 oder 5, **dadurch gekennzeichnet, dass** die Empfangsrichtung durch die Verarbeitungseinheit dem vorderen, dem hinteren oder einem von genau zwei seitlichen Raumwinkelbereichen (10, 11, 12, 13) zuordenbar ist.

4. Lawinen-Verschütteten-Suchgerät nach einem der Ansprüche 1 bis 3, **dadurch gekennzeichnet, dass** Öffnungswinkel und/oder Anzahl der Raumwinkelbereiche (10, 11, 12, 13, 60, 61, 62, 63, 64) dynamisch anpassbar sind.

5. Lawinen-Verschütteten-Suchgerät nach einem der Ansprüche 1 bis 4, **dadurch gekennzeichnet, dass** sich die durch den Signalgenerator erzeugbaren Tonmuster in wenigstens einem der Merkmale Tonfrequenz, Wiederholrate von periodisch wiederholten Einzeltönen, Dauer der Einzeltöne von periodisch wiederholten Einzeltöne oder Lautstärke unterscheiden.

6. Lawinen-Verschütteten-Suchgerät nach einem der Ansprüche 1 bis 5, **dadurch gekennzeichnet, dass** das Lawinen-Verschütteten-Suchgerät eine Anzeige (58) zur optischen Darstellung der Empfangsrichtung umfasst und dass die Empfangsrichtung gleichzeitig zur akustischen Signalisation durch die Tonmuster auch optisch durch die Anzeige (58) darstellbar ist.

7. Lawinen-Verschütteten-Suchgerät nach einem der Ansprüche 1 bis 6,
**dadurch gekennzeichnet, dass**
a) die Empfangseinheit zum Empfangen eines Sendesignals, welches einen mit einer bestimmten Sendepuls-Periode ausgestrahlten Sendepuls einer bestimmten Sendefrequenz umfasst, ausgebildet ist,
b) das Lawinen-Verschütteten-Suchgerät Lagebestimmungsmittel zur Ermittlung einer Lage des Lawinen-Verschütteten-Suchgeräts auch während Totzeiten zwischen zwei empfangenen Sendepulsen sowie eine Speichereinheit zum Speichern einer zuletzt ermittelten Empfangsrichtung umfasst,
c) durch die Verarbeitungseinheit aufgrund von aktuellen Lagedaten zur Lage des Lawinen-Verschütteten-Suchgeräts und der in der Speichereinheit gespeicherten Empfangsrichtung periodisch eine nachgeführte Empfangsrichtung bestimmbar ist und die nachgeführte Empfangsrichtung einem Raumwinkelbereich (10, 11, 12, 13, 60, 61, 62, 63, 64) zuordenbar ist, und
d) durch den akustischen Signalgenerator abhängig vom Raumwinkelbereich (10, 11, 12, 13, 60, 61, 62, 63, 64), welchem die nachgeführte Empfangsrichtung durch die Verarbeitungseinheit zugeordnet ist, ein Tonmuster erzeugbar ist.

8. Verfahren zur Erzeugung eines Tonmusters zur Signalisierung einer Empfangsrichtung eines empfangenen Sendesignals in einem Lawinen-Verschütteten-Suchgerät, wobei die Empfangsrichtung des Sendesignals von einer Empfangseinheit bestimmt wird, **dadurch gekennzeichnet,**
**dass** die Empfangsrichtung von einer Verarbeitungseinheit einem von 3, 4, 5, 6, 7, 8, 9 oder 10 Raumwinkelbereichen (10, 11, 12, 13, 60, 61, 62, 63, 64) um das Lawinen-Verschütteten-Suchgerät zugeordnet wird, und von einem akustischen Signalgenerator abhängig von dem der Empfangsrichtung zugeordneten Raumwinkelbereich (10, 11, 12, 13, 60, 61, 62, 63,64) eines von wenigstens drei Tonmustern erzeugt wird,
wobei durch den Signalgenerator ein erstes Tonmuster erzeugt wird, wenn die von der Empfangseinheit bestimmte Empfangsrichtung in einem vorderen Raumwinkelbereich (10, 60) liegt, welcher in eine Vorwärtsrichtung (6) des Lawinen-Verschütteten-Suchgeräts gerichtet ist,
wobei durch den Signalgenerator ein zweites Tonmuster erzeugt wird, wenn die von der Empfangseinheit bestimmte Empfangsrichtung in einem hinteren Raumwinkelbereich (11, 61) liegt, welcher in eine Rückwärtsrichtung des Lawinen-Verschütteten-Suchgeräts gerichtet ist, wobei sich das zweite Tonmuster vom ersten Tonmuster unterscheidet,
und wobei durch den Signalgenerator ein drittes Tonmuster erzeugt wird, wenn die von der Empfangseinheit bestimmte Empfangsrichtung in einem von wenigstens einem seitlichen Raumwinkelbereich (12, 13, 62, 63, 64) liegt, welcher ausserhalb des vorderen und ausserhalb des hinteren Raumwinkelbereichs (10, 60, 11, 61) liegt, wobei sich das dritte Tonmuster vom ersten und vom zweiten Tonmuster unterscheidet.

## Claims

1. Avalanche transceiver, comprising:
a) a receiving unit for determining a reception direction of a transmission signal,
b) a processing unit and
c) a sonic signal generator,
**characterised in that**
d) the reception direction can be associated with one of 3, 4, 5 6, 7, 8, 9 or 10 solid angle ranges (10, 11, 12, 13, 60, 61, 62, 63, 64) around the avalanche transceiver by the processing unit, and
e) one of at least three sound patterns can be produced by the sonic signal generator, depending on the solid angle range (10, 11, 12, 13, 60, 61, 62, 63, 64) associated with the reception direction, wherein
f) a first sound pattern can be produced by the signal generator if the reception direction determined by the receiving unit is in a front solid angle range (10, 60) which is directed in a forward direction (6) of the avalanche transceiver, wherein
g) a second sound pattern can be produced by the signal generator if the reception direction determined by the receiving unit is in a rear solid angle range (11, 61) which is directed in a backwards direction of the avalanche transceiver, wherein the second sound pattern differs from the first sound pattern, and wherein
h) a third sound pattern can be produced by the signal generator if the reception direction determined by the receiving unit is in one of at least one side solid angle range (12, 13, 62, 63, 64) which is outside the front and outside the rear solid angle range (10, 60, 11, 61), wherein the third sound pattern differs from the first and from the second sound pattern.

2. Avalanche transceiver according to claim 1, **characterised in that** at least one side solid angle range (12, 13, 62, 63, 64) comprises two partial angle ranges (12a, 12b, 13a, 13b, 62a, 62b, 63a, 63b, 64a, 64b), which are arranged symmetrically in relation to a defined axis (7) of the avalanche transceiver extending from the backwards direction to the forwards direction (6) or in relation to a plane extending through this axis (7).

3. Avalanche transceiver according to claim 4 or 5, **characterised in that** the reception direction can be associated with the front solid angle range, the rear solid angle range or one of exactly two side solid angle ranges (10, 11, 12, 13) by the processing unit.

4. Avalanche transceiver according to one of claims 1 to 3, **characterised in that** opening angles and/or the number of solid angle ranges (10, 11, 12, 13, 60, 61, 62, 63, 64) can be dynamically adapted.

5. Avalanche transceiver according to one of claims 1 to 4, **characterised in that** the sound patterns that can be produced by the signal generator differ in at least one of the features of sound frequency, repetition rate of periodically repeated single tones, duration of the individual tones of periodically repeated individual tones or volume.

6. Avalanche transceiver according to one of claims 1 to 5, **characterised in that** the avalanche transceiver comprises a display (58) for visually representing the reception direction and that the reception direction can also be represented visually by the display (58) at the same time as the sonic signalling by the sound pattern.

7. Avalanche transceiver according to one of claims 1 to 6, **characterised in that**,
a) the receiving unit is designed to receive a transmission signal, which comprises a transmission pulse of a defined transmission frequency transmitted with a defined transmission pulse period,
b) the avalanche transceiver comprises a means of determining location for determining a location of the avalanche transceiver, even during idle times between two received transmission pulses, as well as a storage unit for storing a most recently-identified reception direction,
c) by means of the processing unit, an updated reception direction can periodically be determined on the basis of current location data about the location of the avalanche transceiver and about the reception direction stored in the storage unit, and the updated reception direction can be associated with a solid angle range (10, 11, 12, 13, 60, 61, 62, 63, 64), and
d) a sound pattern can be produced by the sonic signal generator, depending on the solid angle range (10, 11, 12, 13, 60, 61, 62, 63, 64) with which the updated reception direction is associated by the processing unit.

8. Method for producing a sound pattern for signalling a reception direction of a received transmission signal in an avalanche transceiver, wherein the reception direction of the transmission signal is determined by a receiving unit, **characterised in that**
the reception direction is associated with one of 3, 4, 5, 6, 7, 8, 9 or 10 solid angle ranges (10, 11, 12, 13, 60, 61, 62, 63, 64) around the avalanche transceiver by a processing unit, and one of at least three sound patterns is produced by a sonic signal generator, depending on the solid angle range (10, 11, 12, 13, 60, 61, 62, 63, 64) associated with the reception direction,
wherein a first sound pattern is produced by the signal generator if the reception direction determined by the receiving unit is in a front solid angle range (10, 60) which is directed in a forward direction (6) of the avalanche transceiver,
wherein a second sound pattern is produced by the signal generator if the reception direction determined by the receiving unit is in a rear solid angle range (11, 61) which is directed in a backwards direction of the avalanche transceiver, wherein the second sound pattern differs from the first sound pattern,
and wherein a third sound pattern is produced by the signal generator if the reception direction determined by the receiving unit is in one of at least one side solid angle range (12, 13, 62, 63, 64) which is outside the front and outside the rear solid angle range (10, 60, 11, 61), wherein the third sound pattern differs from the first and from the second sound pattern.

## Revendications

1. Appareil de recherche de personnes ensevelies par avalanche, comprenant :
a) une unité de réception permettant de déterminer une direction de réception d'un signal d'émission,
b) une unité de traitement et
c) un générateur de signaux acoustiques,
**caractérisé en ce que**
d) la direction de réception peut être associée par l'unité de traitement à l'une des 3, 4, 5, 6, 7, 8, 9 ou 10 zones d'angle solide (10, 11, 12, 13, 60, 61, 62, 63, 64) autour de l'appareil de recherche de personnes ensevelies par avalanche, et
e) **en ce que** l'un parmi au moins trois motifs sonores peut être généré par le générateur de signaux acoustiques selon la zone d'angle solide (10, 11, 12, 13, 60, 61, 62, 63, 64) associée à la direction de réception,
f) un premier motif sonore pouvant être généré par le générateur de signaux lorsque la direction de réception déterminée par l'unité de réception se trouve dans une zone d'angle solide avant (10, 60) orientée dans une direction avant (6) de l'appareil de recherche de personnes ensevelies par avalanche,
g) un deuxième motif sonore pouvant être généré par le générateur de signaux lorsque la direction de réception déterminée par l'unité de réception se trouve dans une zone d'angle solide arrière (11, 61) orientée dans une direction vers l'arrière de l'appareil de recherche de personnes ensevelies par avalanche, le deuxième motif sonore étant différent du premier motif sonore, et
h) un troisième motif sonore pouvant être généré par le générateur de signaux lorsque la direction de réception déterminée par l'unité de réception se trouve dans l'une d'au moins une zone d'angle solide latérale (12, 13, 62, 63, 64) qui se trouve à l'extérieur de la zone d'angle solide avant et à l'extérieur de la zone d'angle solide arrière (10, 60, 11, 61), le troisième motif sonore étant différent du premier et du deuxième motif sonore.

2. Appareil de recherche de personnes ensevelies par avalanche selon la revendication 1, **caractérisé en ce qu'**au moins une zone d'angle solide latérale (12, 13, 62, 63, 64) comprend deux zones d'angle partielles (12a, 12b, 13a, 13b, 62a, 62b, 63a, 63b, 64a, 64b) qui sont disposées symétriquement par rapport à un axe (7) de l'appareil de recherche de personnes ensevelies par avalanche défini comme s'étendant de la direction arrière à la direction avant (6) ou à un plan passant par ledit axe (7).

3. Appareil de recherche de personnes ensevelies par avalanche selon la revendication 4 ou 5, **caractérisé en ce que** la direction de réception peut être associée par l'unité de traitement à la zone d'angle solide avant, à la zone d'angle solide arrière ou à l'une parmi exactement deux zones d'angle solide latérales (10, 11, 12, 13).

4. Appareil de recherche de personnes ensevelies par avalanche selon l'une des revendications 1 à 3, **caractérisé en ce que** l'angle d'ouverture et/ou le nombre de zones d'angle solide (10, 11, 12, 13, 60, 61, 62, 63, 64) peuvent être adaptés de manière dynamique.

5. Appareil de recherche de personnes ensevelies par avalanche selon l'une des revendications 1 à 4, **caractérisé en ce que** les modèles de sons pouvant être générés par le générateur de signaux se distinguent par au moins l'une des caractéristiques suivantes : fréquence de son, taux de répétition de sons individuels répétés périodiquement, durée des sons individuels répétés périodiquement ou volume sonore.

6. Appareil de recherche de personnes ensevelies par avalanche selon l'une des revendications 1 à 5, **caractérisé en ce que** l'appareil de recherche de personnes ensevelies par avalanche comprend un affichage (58) pour la représentation visuelle de la direction de réception et **en ce que** la direction de réception peut également être représentée visuellement par l'affichage (58) en même temps que la signalisation acoustique par les échantillons sonores.

7. Appareil de recherche de personnes ensevelies par avalanche selon l'une des revendications 1 à 6, **caractérisé en ce que**
a) l'unité de réception est conçue pour recevoir un signal d'émission qui comprend une impulsion d'émission d'une fréquence d'émission déterminée, émise avec une période d'impulsion d'émission déterminée,
b) l'appareil de recherche de personnes ensevelies par avalanche comprend des moyens de détermination de position pour déterminer une position de l'appareil de recherche de personnes ensevelies par avalanche même pendant des temps morts entre deux impulsions d'émission reçues ainsi qu'une unité de mémoire pour mémoriser une direction de réception déterminée en dernier lieu,
c) l'unité de traitement permet de déterminer périodiquement, en fonction des données de position actuelles concernant la position de l'appareil de recherche de personnes ensevelies par avalanche et de la direction de réception mémorisée dans l'unité de mémoire, une direction de réception suivie et la direction de réception suivie peut être associée à une zone d'angle solide (10, 11, 12, 13, 60, 61, 62, 63, 64), et
d) un motif sonore peut être généré par le générateur de signaux acoustiques en fonction de la zone d'angle solide (10, 11, 12, 13, 60, 61, 62, 63, 64) à laquelle est associée la direction de réception suivie par l'unité de traitement.

8. Procédé de production d'un motif sonore pour la signalisation d'une direction de réception d'un signal d'émission reçu dans un appareil de recherche de personnes ensevelies par avalanche, la direction de réception du signal d'émission étant déterminée par une unité de réception, **caractérisé**
**en ce que** la direction de réception est associée par une unité de traitement à l'une des 3, 4, 5, 6, 7, 8, 9 ou 10 zones d'angle solide (10, 11, 12, 13, 60, 61, 62, 63, 64) autour de l'appareil de recherche de personnes ensevelies par avalanche, et en ce qu'un générateur de signaux acoustiques produit l'un parmi au moins trois motifs sonores selon la zone d'angle solide (10, 11, 12, 13, 60, 61, 62, 63, 64) associée à la direction de réception,
un premier motif sonore étant généré par le générateur de signaux lorsque la direction de réception déterminée par l'unité de réception se trouve dans une zone d'angle solide avant (10, 60) qui est orientée dans une direction avant (6) de l'appareil de recherche de personnes ensevelies par avalanche,
un deuxième motif sonore étant généré par le générateur de signaux lorsque la direction de réception déterminée par l'unité de réception se trouve dans une zone d'angle solide arrière (11, 61) orientée dans une direction arrière de l'appareil de recherche de personnes ensevelies par avalanche, le deuxième motif sonore étant différent du premier motif sonore,
et un troisième motif sonore étant généré par le générateur de signaux lorsque la direction de réception déterminée par l'unité de réception se trouve dans l'une d'au moins une zone d'angle solide latérale (12, 13, 62, 63, 64) qui se trouve à l'extérieur de la zone d'angle solide avant et à l'extérieur de la zone d'angle solide arrière (10, 60, 11,61), le troisième motif sonore étant différent du premier et du deuxième motif sonore.
